# EUROPEAN PATENT APPLICATION

(11) **EP 3 836 593 A1**
(43) Date of publication of application: **16.06.2021**
(21) Application number: 18935943.3
(22) Date of filing: 08.10.2018
(51) Int. Cl.: H04W 24/00, H04L 5/00

(54) **WIRELESS COMMUNICATION METHOD AND TERMINAL DEVICE**

(30) Priority: 26.09.2018 WO PCT/CN2018/107543
(71) Applicant: GUANGDONG OPPO MOBILE TELECOMMUNICATIONS CORP., LTD., Dongguan Guangdong 523860 (CN)
(72) Inventor: CHEN, Wenhong, Dongguan, Guangdong 523860 (CN); FANG, Yun, Dongguan, Guangdong 523860 (CN)
(74) Representative: Penza, Giancarlo
(86) International application number: PCT/CN2018/109360
(87) International publication number: WO 2020/062318

(57) **Abstract**

Disclosed are a wireless communication method and a terminal device, capable of transmitting uplink control information respectively corresponding to a plurality of TRPs on limited control channel resources. The method comprises: a terminal device determines at least one piece of space-associated information from a plurality pieces of space-associated information corresponding to a target physical uplink control channel (PUCCH) resource, wherein one of the at least one piece of space-associated information is used for transmitting one of at least one piece of control information; the terminal device respectively transmits the at least one control information on the target PUCCH resource using the determined at least one space-associated information.

## Description

The present application claims the priority of an application No. PCT/CN2018/107543, filed with Chinese Patent Office on September 26, 2018, and entitled "Wireless Communication Method and Terminal Device", the contents of which are incorporated herein by reference in their entirety.

### Technical Field

The present application relates to the field of communication, in particular to a wireless communication method and a terminal device.

### Background

In a New Radio (NR) system, multiple Transmission/Reception Points (TRPs) at a network side may independently schedule a terminal device and transmit downlink data, thus improving throughput of data transmission. This transmission mode is referred to as Non-Coherent Joint Transmission (NC-JT). In order to support such transmission mode, the terminal needs to report Channel State Information (CSI) corresponding to each TRP separately. If backhaul between TRPs are not ideal, the terminal needs to report a corresponding CSI to each TRP respectively.

In the NR system, how to transmit uplink control information respectively corresponding to each of the multiple TRPs on limited control channel resources is a problem to be solved urgently.

### Summary

Embodiments of the present application provide a wireless communication method and a terminal device, which may transmit uplink control information respectively corresponding to multiple TRPs on limited control channel resources.

In a first aspect, there is provided a wireless communication method, including: determining, by a terminal device, at least one piece of spatial relation information from multiple pieces of spatial relation information corresponding to a target physical uplink control channel (PUCCH) resource, wherein one piece of spatial relation information of the at least one piece of spatial relation information is used for transmitting one of at least one piece of control information; and transmitting, by the terminal device, the at least one control piece of information on the target PUCCH resource respectively by using the determined at least one piece of spatial relation information.

In a second aspect, there is provided a terminal device configured to perform a method of above first aspect or a method in any possible implementation mode of the above first aspect. Specifically, the terminal device includes functional modules configured to perform a method of above first aspect.

In a third aspect, there is provided a terminal device including a processor and a memory. The memory is configured to store a computer program, and the processor is configured to call and run the computer program stored in the memory to execute a method of the above first aspect.

In a fourth aspect, there is provided a chip configured to implement a method in above first aspect. Specifically, the chip includes: a processor configured to call and run a computer program from a memory, causing a device on which the chip is installed to execute a method in the above first aspect.

In a fifth aspect, there is provided a computer readable storage medium configured to store a computer program, wherein the computer program causes a computer to execute a method in the above first aspect.

In a sixth aspect, there is provided a computer program product, comprising computer program instructions, wherein the computer program instructions cause a computer to execute a method in the above first aspect.

In a seventh aspect, there is provided a computer program, wherein when the computer program is run on a computer, the computer is caused to execute a method in the above first aspect.

Therefore, in embodiments of the present application, the PUCCH resource may correspond to multiple pieces of spatial relation information. When control information is transmitted by the PUCCH resource, different spatial relation information may be used for control information of different receiving terminals (specifically may be TPRs), so that a transmission of the control information of multiple receiving terminals may be implemented, and the PUCCH resource may be shared by the control information of the multiple receiving terminals, which may save resource overhead.

### Brief Description of Drawings

FIG. 1 is a schematic diagram of an architecture of a communication system provided by an embodiment of the present application.
FIG. 2 is a schematic flowchart of a wireless communication method provided by an embodiment of the present application.
FIG. 3 is a schematic block diagram of a terminal device provided by an embodiment of the present application.
FIG. 4 is a schematic block diagram of a communication device provided by an embodiment of the present application.
FIG. 5 is a schematic block diagram of a communication system provided by an embodiment of the present application.
FIG. 6 is a schematic block diagram of a communication system provided by an embodiment of the present application.

### Detailed Description

Technical solutions in embodiments of the present application will be described below with reference to drawings in embodiments of the present application. It is apparent that the embodiments described are just part embodiments of the present application, but not all embodiments of the present application. Based on the embodiments of the present application, all other embodiments achieved by an ordinary skilled in the art without paying inventive effort shall fall within a protection scope of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, or a 5G system, etc.

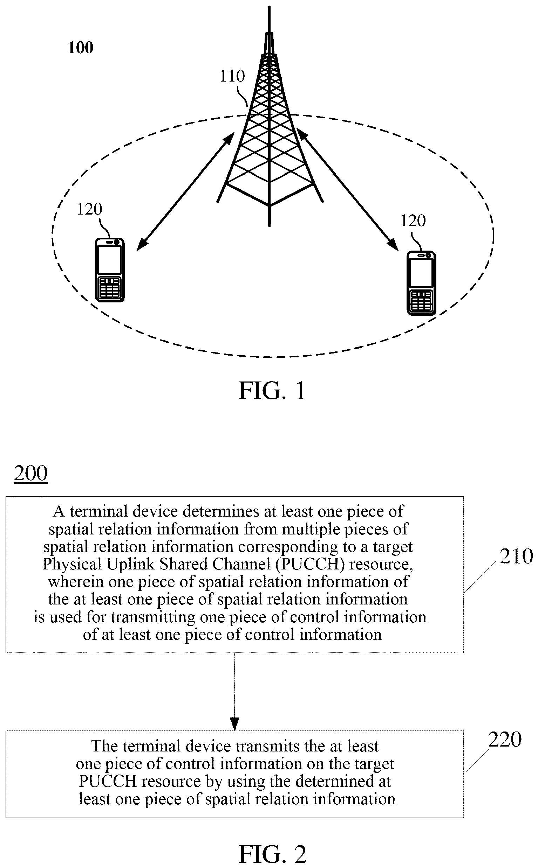

Illustratively, a communication system 100 applied in an embodiment of the present application is as shown in FIG. 1. The communication system 100 may include a network device 110, wherein the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or a CDMA system, a NodeB (NB) in a WCDMA system, an Evolutional Node B (eNB or eNodeB) in an LTE system, or a radio controller in a Cloud Radio Access Network (CRAN). Or the network device may be a mobile switch center, a relay station, an access point, a vehicle-mounted device, a wearable device, a hub, a switch, a bridge, a router, a network side device in a 5G network, or a network device in a future evolved Public Land Mobile Network (PLMN), etc.

The communication system 100 also includes at least one terminal device 120 located within the coverage range of the network device 110. A term "terminal device" used herein includes, but not limited to, connect through a wired circuit, for example, through a Public Switched Telephone Network (PSTN), a Digital Subscriber Line (DSL), a digital cable, a direct cable; and/or another data connection/network; and/or through a wireless interface, for example, for a cellular network, a Wireless Local Area Network (WLAN), a digital television network such as a DVB-H network, a satellite network, and an AM-FM broadcast transmitter; and/or an apparatus of another communication terminal, configured to receive/send a communication signal; and/or an Internet of Things (IoT) device. A terminal device configured to communicate through a wireless interface may be referred to as a "wireless communication terminal", a "wireless terminal" or a "mobile terminal". Examples of the mobile terminal include, but not limited to, a satellite or cellular telephone, a Personal Communication System (PCS) terminal capable of combining a cellular wireless telephone with data processing, faxing, and data communication abilities, a PDA that may include a radio telephone, a pager, an internet/intranet access, a Web browser, a memo pad, a calendar, and/or a Global Positioning System (GPS) receiver, a conventional laptop and/or palmtop receiver or other electronic apparatuses including a radio telephone transceiver. The terminal device may be referred to as an access terminal, a User Device (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing devices connected to a wireless modem, a vehicle-mounted device, a wearable device, a terminal device in a 5G network, or a terminal device in a future evolved Public Land Mobile Network (PLMN), etc.

Optionally, a Device to Device (D2D) communication may be performed between the terminal devices 120.

Optionally, a 5G system or a 5G network may be referred to as a New Radio (NR) system or a NR network.

FIG. 1 illustratively shows one network device and two terminal devices. Optionally, the communication system 100 may include multiple network devices, and other quantity of terminal devices may be included within a coverage range of each network device, and this is not limited in embodiments of the present application.

Optionally, the communication system 100 may further include other network entities such as a network controller, and a mobile management entity. Embodiments of the present application are not limited thereto.

It should be understood that, a device with a communication function in a network/system in embodiments of the present application may be referred to as a communication device. Taking the communication system 100 shown in FIG. 1 as an example, the communication device may include a network device 110 and terminal devices 120 which have communication functions, and the network device 110 and the terminal devices 120 may be specific devices described above, which will not be described here again. The communication device may also include other devices in the communication system 100, such as a network controller, a mobile management entity and other network entities. Embodiments of the present application are not limited thereto.

FIG. 2 is a schematic flowchart of a wireless communication method 200 of an embodiment of the present application. The method 200 includes at least part of following contents.

In 210, a terminal device determines at least one piece of spatial relation information from multiple pieces of spatial relation information corresponding to a target Physical Uplink Shared Channel (PUCCH) resource, wherein one piece of spatial relation information of the at least one piece of spatial relation information is used for transmitting one piece of control information of at least one piece of control information.

Optionally, receiving ends of different pieces of control information of the at least one piece of control information mentioned in an embodiment of the present application may be different TRPs.

Optionally, types of different pieces of control information of the at least one piece of control information mentioned in embodiment of the present application may be different. For example, one may be ACK/NACK information and the other may be CSI (Channel State Information). Or, one may be CSI based on a type I codebook, and the other may be CSI based on a type II codebook.

Optionally, the control information mentioned in embodiments of the present application may refer to information transmitted on a PUCCH resource.

Optionally, the control information mentioned in embodiments of the present application may include Acknowledgement (ACK)/ Negative ACKnowledgment (NACK) information of a Physical Downlink Shared Channel (PDSCH), or some pieces of channel state information used for downlink scheduling (for example, CSI), or other uplink control information required by a network side.

It should be understood that embodiments of the present application may be used not only for transmissions of above control information, but also for transmissions of other uplink information. For example, it may be used for a transmission of at least one Sounding Reference Signal (SRS), or common transmission information of SRS and control information. That is, the at least one piece of control information in embodiments of the present application may be replaced with at least one piece of uplink information.

Optionally, in embodiments of the present application, that the target PUCCH resource corresponds to multiple pieces of spatial relation information may refer to: when an uplink transmission is performed on the target PUCCH resource, the uplink transmission may be performed based on all or part of the multiple pieces of spatial relation information.

Optionally, in embodiments of the present application, transmitting the control information by using the spatial relation information may refer to transmitting the control information by using a beam and/or an antenna panel (also referred as to panel) corresponding to the spatial relation information.

In the above, among multiple pieces of spatial relation information, beams and/or antenna panels corresponding to different pieces of spatial relation information may be different.

For example, if the multiple pieces of spatial relation information include two pieces of spatial relation information, the control information transmitted based on spatial relation information 1 is transmitted on antenna panel 1, and the control information transmitted based on spatial relation information 2 is transmitted on antenna panel 2.

For example, if the multiple pieces of spatial relation information include 2 pieces of spatial relation information, control information 1 may be transmitted based on beam 1 corresponding to the spatial relation information 1, and control information 2 may be transmitted based on beam 2 corresponding to the spatial relation information 2.

The target PUCCH resource mentioned in embodiments of the present application may be one PUCCH resource, wherein the one PUCCH resource may be a periodic resource. The method mentioned in embodiments of the present application may be used for an uplink transmission in any period of the periodic resource.

The target resource mentioned in embodiments of the present application may also be a PUCCH resource set, wherein the PUCCH resource set may include multiple PUCCH resources, and each PUCCH resource may be a periodic resource.

In the above, that the PUCCH resource set corresponds to multiple pieces of spatial relation information may refer to: when any resource in the PUCCH resource set is used for performing an uplink transmission, the uplink transmission may be performed based on all or part of the multiple pieces of spatial relation information.

Optionally, in embodiments of the present application, the multiple pieces of spatial relation information may respectively correspond to multiple TRPs in a one-by-one manner (or multiple antenna panels at the network side, and description in the embodiment of the present application is made by taking TRPs as an example).

Optionally, in embodiments of the present application, the spatial relation information may include a CSI-RS (Reference Signal) resource index, an SRS resource index or a Synchronization Signal and PBCH Block (SSB) index.

In the above, the multiple pieces of spatial relation information may all include CSI-RS resource indexes, SRS resource indexes, or SSB indexes, that is, types of the indexes included are same.

However, it should be understood that the types of the indexes included in the multiple pieces of spatial relation information may also be different. For example, some pieces of spatial relation information include CSI-RS indexes, and other pieces of spatial relation information include SRS indexes.

Optionally, the beam corresponding to the spatial relation information may be a transmitting beam or a receiving beam of a reference signal corresponding to the spatial relation information. In the above, the reference signal corresponding to the spatial relation information mentioned here may refer to that the spatial relation information includes an index of the reference signal or an index of a resource of the reference signal.

For example, the spatial relation information includes the CSI-RS resource index, and the beam corresponding to the spatial relation information may be a beam used for receiving the CSI-RS on a resource indicated by the CSI-RS resource index.

For example, the spatial relation information includes the SRS resource index, and the beam corresponding to the spatial relation information may be a beam used for transmitting the SRS on a resource indicated by the SRS resource index.

For example, the spatial relation information includes the SSB index, and the beam corresponding to the spatial relation information may be a receiving beam used for receiving the SSB indicated by the SSB index.

Optionally, an antenna panel corresponding to the spatial relation information may be a transmitting antenna panel or a receiving antenna panel for the reference signal corresponding to the spatial relation information. In the above, the reference signal corresponding to the spatial relation information mentioned here may refer to that the spatial relation information includes an index of the reference signal or an index of a resource of the reference signal.

For example, the spatial relation information includes the CSI-RS resource index, and the antenna panel corresponding to the spatial relation information may be an antenna panel used for receiving the CSI-RS on the resource indicated by the CSI-RS resource index.

For example, the spatial relation information includes the SRS resource index, and the antenna panel corresponding to the spatial relation information may be an antenna panel used for transmitting the SRS on a resource indicated by the SRS resource index.

For example, the spatial relation information includes the SSB index, and the antenna panel corresponding to the spatial relation information may be an antenna panel used for receiving the SSB indicated by the SSB index.

Optionally, in embodiments of the present application, if the spatial relation information includes the CSI-RS resource index, CSI-RS resource indexes included in different pieces of spatial relation information among the multiple pieces of spatial relation information belong to different CSI-RS resource sets.

Specifically, for different TRPs among multiple TRPs, the CSI-RS resource sets used for transmitting the CSI-RSs may be different, and the CSI-RS resource indexes included in different pieces of spatial relation information among multiple pieces of spatial relation information belong to different CSI-RS resource sets. Therefore, a piece of spatial relation information determined for one certain TRP may be associated with its corresponding CSI-RS resource set, and a beam and/or an antenna panel corresponding to the spatial relation information determined for the TRP may be a beam and/or an antenna used by a CSI-RS resource set configured for the TRP.

In the above, the CSI-RS resources mentioned in embodiments of the present application may belong to a CSI-RS resource set, wherein the CSI-RS resource set may include multiple CSI-RS resources. One CSI-RS resource may be a periodic resource, or an aperiodic or quasi-persistent resource. When the terminal device receives the CSI-RSs transmitted on all CSI-RS resources in a same CSI-RS resource set, used beams and/or antenna panels (which may be referred to as beams and/or antenna panels corresponding to the CSI-RS resource set here) may be the same. Beams and/or antenna panels corresponding to different CSI-RS resource sets are different.

It should be understood that the same CSI-RS resource set may correspond to one beam and/or antenna panel as mentioned above, but the same CSI-RS resource set my also correspond to multiple beams and/or antenna panels (for example, there are multiple CSI-RS resources, and their corresponding beams and/or antenna panels are different from each other). In this case, beams and/or antenna panels corresponding to different CSI-RS resource sets may also be completely different (that is, a common beam and/or antenna panel does not exist).

Optionally, in embodiments of the present application, if the spatial relation information includes the SRS resource index, SRS resource indexes included in different pieces of spatial relation information among the multiple pieces of spatial relation information belong to different SRS resource sets.

Specifically, for different TRPs among the multiple TRPs, the SRS resource sets of the SRSs transmitted by the terminal device may be different (it may be understood here that different TRPs correspond to different SRS resource sets), and the SRS resource indexes included in different pieces of spatial relation information among the multiple spatial relation information belong to different SRS resource sets. Therefore, the spatial relation information determined for one certain TRP may be associated with its corresponding SRS resource set, and the beam and/or antenna panel corresponding to the spatial relation information determined for the TRP may be the beam and/or the antenna panel used by the terminal device for transmitting the SRSs for SRS resources in a SRS resource set configured for the TRP.

In the above, the SRS resources mentioned in embodiments of the present application may belong to the SRS resource set, and one SRS resource may be a periodic resource, or an aperiodic or quasi-persistent resource. When the terminal device transmits SRS on all SRS resources in a same SRS resource set, used beams and/or antenna panels (which may be referred to as beams and/or antenna panels corresponding to the SRS resource set here) may be the same. Beams and/or antenna panels corresponding to different SRS resource sets are different.

It should be understood that the same SRS resource set may correspond to one beam and/or antenna panel as mentioned above, but the same SRS resource set may also correspond to multiple beams and/or antenna panels (for example, there are multiple SRS resources, and their corresponding beams and/or antenna panels are different from each other). In this case, beams and/or antenna panels corresponding to different SRS resource sets may also be completely different (that is, a common beam and/or antenna panel does not exist).

Optionally, in embodiments of the present application, if the spatial relation information includes SSB indexes, different pieces of cell information are carried by SSBs corresponding to SSB indexes included in different pieces of spatial relation information among the multiple pieces of spatial relation information, and the cell information mentioned here includes but is not limited to cell ID. For example, the cell information may also be any information carried by a PBCH in an SSB.

Specifically, for different TRPs among multiple TRPs, SSBs may be used for sending different cell information, wherein different cell information indicates that a SSB comes from a different TRP, therefore the spatial relation information determined for one certain TRP may be associated with its corresponding cell information, and the beam and/or antenna panel corresponding to the spatial relation information determined for the TRP may be a beam and/or an antenna panel used by the TRP for transmitting the SSB carrying corresponding cell information.

In the above, different SSB indexes in embodiments of the present application may correspond to different beams and/or antenna panels, that is, SSBs corresponding to the SSB indexes may be transmitted using different beams and/or antenna panels. Or, SSBs carrying different pieces of cell information may correspond to different beams and/or antenna panels.

Optionally, in embodiments of the present application, a beam used for transmitting signals may also be referred to as a spatial domain transmission filter, and a beam used for receiving signals may also be referred to as a spatial domain reception filter, or both of them are simply referred to as spatial domain filters.

Optionally, in embodiments of the present application, a network device may configure the above-mentioned spatial relation information for the terminal device.

Specifically, the network device may configure multiple corresponding spatial relation information for the target PUCCH resource.

If the target PUCCH resource is a PUCCH resource, multiple pieces of spatial relation information may be configured for the PUCCH resource, and if the target PUCCH resource is a PUCCH resource set, the multiple pieces of spatial relation information may be configured for the PUCCH resource set.

In the above, the network device may configure multiple pieces of spatial relation information for the target PUCCH resource through Radio Resource Control (RRC) and/or Media Access Control (MAC) signaling.

In a first implementation mode, the network device may send the RRC signaling to the terminal device, wherein the RRC signaling may configure the above-mentioned multiple pieces of spatial relation information for the target PUCCH resource.

In this implementation mode, the number of the multiple pieces of spatial relation information indicated by the RRC signaling may be less than or equal to a preset value. In the above, the preset value may be configured by the network device to the terminal device (may be configured based on the number of antenna panels and/or beams that may be used by the terminal device which is reported by the terminal device), or may be preset on the terminal device based on a protocol, or may be determined by the terminal device and network device respectively based on the number of antenna panels and/or beams that may be used by the terminal device.

In a second implementation mode, the network device may send the RRC signaling to the terminal device, wherein the RRC signaling is used for configuring a candidate set of spatial relation information. And the network device sends a MAC signaling to the terminal device, wherein the MAC signaling is used for indicating the multiple pieces of spatial relation information in the candidate set.

In the above, in this implementation mode, the number of the spatial relation information included in the candidate set may be greater than the above-mentioned number of the multiple pieces of spatial relation information. The terminal device may semi-statically configure a large number of spatial relation information through the RRC signaling, and indicate in the MAC signaling the spatial relation information needed to be used.

In this implementation mode, an amount of spatial relation information indicated by the RRC signaling may be greater than a preset value. In the above, the preset value may be configured by the network device to the terminal device (may be configured based on the number of antenna panels and/or beams that may be used by the terminal device which is reported by the terminal device), or preset on the terminal device based on a protocol, or determined by the terminal device and network device respectively based on the number of antenna panels and/or beams that may be used by the terminal device.

In a specific embodiment, when the number of the spatial relation information indicated by the RRC signaling is less than or equal to the preset value, the MAC signaling may not be used to indicate the multiple spatial relation information. When the number of the spatial relation information indicated by the RRC signaling is greater than the preset value, the MAC signaling is used to indicate the multiple pieces of spatial relation information.

In a third implementation mode, the network side may send the MAC signaling to the terminal device, wherein the MAC signaling may configure the above multiple pieces of spatial relation information for the target PUCCH resource. At this time, there is no longer need to send the RRC signaling to indicate the multiple pieces of spatial relation information.

For example, in embodiment, an indication field of PUCCH spatial relation information in a MAC layer signaling contains N bits, wherein N is a size of the above candidate set, and each bit corresponds to one piece of spatial relation information in the candidate set, and the multiple pieces of spatial relation information are spatial relation information corresponding to bits with value 1 in the indication field.

For another example, in embodiment, assuming that the number of the multiple pieces of spatial relation information is K, the network side preconfigures K candidate sets through the RRC signaling (wherein the K candidate sets may commonly be equivalent to the candidate sets of spatial relation information mentioned above), and then indicates one piece of spatial relation information from each candidate set respectively through the MAC layer signaling, so as to obtain K pieces of spatial relation information. At this time, the PUCCH spatial relation information indication field of the MAC may contain K*M bits, wherein M is a size of a candidate set.

In order to understand the present application more clearly, how to determine the spatial relation information with regard to the control information will be described below. A first control information mentioned below may be any one control information among the multiple pieces of control information, and a first spatial relation information may be spatial relation information for transmitting the first control information.

Specifically, the terminal device may determine the first spatial relation information for the first control information in the at least one pieces of control information from the multiple pieces of spatial relation information according to at least one of the following:
a reporting configuration of the first control information, content of the first control information, a downlink data channel (specifically PDSCH) corresponding to the first control information (for example, a scheduling order of the downlink data channel, etc.), and a control channel for scheduling the downlink data channel corresponding to the first control information.

Optionally, the reporting configuration of the first control information may indicate configuration information used for the terminal to obtain and report the first control information. For example, a resource occupied by a downlink reference signal used for measuring the first control information, a measurement mode of the first control information and how to report the first control information.

In the above, the first control information may be a CSI, so the first spatial relation information is determined based on a CSI reporting configuration corresponding to the first control information.

Optionally, the CSI reporting configuration includes a configuration for measuring and obtaining a downlink reference signal of the CSI, a measurement mode of the CSI, a reporting mode of the CSI and a resource used for reporting the CSI, etc.

Optionally, the first spatial relation information may be determined based on a configuration ID of the CSI reporting configuration corresponding to the first control information, a configuration set to which the CSI reporting configuration corresponding to the first control information belongs, or indication information in the CSI reporting configuration corresponding to the first control information.

In the above, a target PUCCH resource may correspond to multiple CSI reporting configurations, and each CSI transmitted on the target PUCCH resource may correspond to one of the multiple CSI reporting configurations. In the above, that a target PUCCH resource corresponds to the multiple CSI reporting configurations mentioned here refers to that CSI corresponding to the multiple CSI reporting configurations respectively may be sent on the target PUCCH resource. Moreover, what is mentioned here that one piece of control information may correspond to one CSI reporting configuration may refer to that the one piece of control information may be transmitted on the target PUCCH resource by using the one CSI reporting configuration.

In the above, the indication information in the CSI reporting configuration corresponding to the first control information may be any one piece of indication information in the CSI reporting configuration. For example, a downlink reference signal configuration for measurement, a CSI reporting resource configuration, a TRP indication corresponding to the CSI reporting, spatial relation information indication corresponding to the CSI reporting or beam indication corresponding to the CSI reporting, etc.

Optionally, in embodiments of the present application, the reporting resources in above reporting configuration may include the target PUCCH resource.

Specifically, if there are multiple CSI reporting configurations including the target PUCCH resource, the terminal sequentially determines the spatial relation information corresponding to each CSI reporting configuration from the multiple pieces of spatial relation information according to an order of CSI reporting configuration IDs. For example, if there are 2 CSI reporting configurations including the target PUCCH resource, a CSI reporting configuration with a smaller configuration ID corresponds to a first piece of spatial relation information among the multiple pieces of spatial relation information, and a CSI reporting configuration with a greater configuration ID corresponds to a second piece of spatial relation information among the multiple pieces of spatial relation information.

Or, if there are multiple CSI reporting configurations including the target PUCCH resource, and the multiple CSI reporting configurations belong to different configuration sets, the terminal determines multiple pieces of corresponding spatial relation information according to a configuration set to which the terminal belongs. For example, a first CSI configuration set corresponds to the first piece of spatial relation information among the multiple pieces of spatial relation information, and a second CSI configuration set corresponds to the second spatial relation information among the multiple pieces of spatial relation information. Each configuration set mentioned here may include multiple CSI configurations.

Specifically, there may be different CSI reporting configurations (which may be configuration sets) for different TRPs. The terminal determines CSI corresponding to a certain TRP according to the CSI reporting configuration corresponding to the TRP, determines a target PUCCH resource for transmitting the CSI according to the CSI reporting configuration, and determines the spatial relation information based on the CSI reporting configuration.

In the above, when the CSI is being reported, it may be reported by using its corresponding CSI reporting configuration.

Optionally, in embodiments of the present application, the first spatial relation information is determined based on whether content of the first control information is acknowledgement/negative acknowledgement ACK/NACK feedback information or CSI.

Specifically, the terminal device may determine the spatial relation information according to whether the ACK/NACK information or the CSI needs to be reported, wherein spatial relation information corresponding to the ACK/NACK may be different from spatial relation information corresponding to the CSI.

For example, the spatial relation information used for reporting the ACK/NACK is spatial relation information 1, and the spatial relation information used for sending the CSI is spatial relation information 2.

Or, the first spatial relation information is determined based on a spatial relation information indication included in the first control information.

Specifically, the control information may include an indication field, wherein the indication field may indicate which piece of spatial relation information needs to be used, so that which piece of spatial relation information to be used may be determined according to a spatial relation information indication of the indication field.

Optionally, in embodiments of the present application, a downlink channel corresponding to the first control information is a first physical downlink shared channel (PDSCH), and the first control information is ACK/NACK feedback information of the first PDSCH.

In the above, the first spatial relation information is determined from the multiple pieces of spatial relation information based on a scheduling order of the first PDSCH and/or a resource index occupied by the control channel for scheduling the first PDSCH.

In the above, the scheduling order of the PDSCH mentioned here may be a scheduling order of the first PDSCH in at least one PDSCH, wherein the at least one PDSCH is all PDSCHs that need to transmit NACK/ACK on the target PUCCH resource at present, and the spatial relation information used by PDSCHs with different scheduling orders for sending their corresponding feedback information may be different.

In the above, the resource index of the PDSCH mentioned here may indicate a resource set to which a resource of the PDSCH belong.

For example, if the number of PDSCHs that need to transmit the ACK/NACK on the target PUCCH resource is 2, and two PDCCH (Physical Downlink Control Channel) resource sets are pre-configured on the terminal, among them, a PDSCH scheduled by a PDCCH in PDCCH resource set 1 corresponds to the first piece of spatial relation information among the multiple pieces of spatial relation information, and a PDSCH scheduled by a PDCCH in PDCCH resource set 2 corresponds to the second piece of spatial relation information among the multiple pieces of spatial relation information.

Optionally, in embodiments of the present application, a PDSCH corresponding to the first control information is a first PDSCH, the first control information is ACK/NACK feedback information of the first PDSCH, and the first spatial relation information is determined based on transport block information (which may be a transport block configuration for example) used by the first PDSCH.

Specifically, the first spatial relation information may be determined based on a transport block index used by the first PDSCH.

For example, if the target PUCCH resource corresponds to 2 pieces of spatial relation information and is used for transmitting ACK/NACK information of the first PDSCH, the first spatial relation information is a first piece of spatial relation information of the 2 pieces of spatial relation information when the transport block index used by the first PDSCH is transport block 1. The first spatial relation information is a second piece of spatial relation information of the 2 pieces of spatial relation information when the transport block index used by the first PDSCH is transport block 2.

Specifically, the transport block index used by the PDSCH is determined according to a transport block configuration in DCI for scheduling the PDSCH. The DCI may indicate which transport block is currently enabled for a data transmission.

It should be understood that in addition to determining the first spatial relation information according to the transport block index, the first spatial relation information may also be determined based on other information of the transport block (for example, other transport block configurations).

Optionally, in embodiments of the present application, the PDSCH corresponding to the first control information is the first PDSCH, the first control information is the ACK/NACK feedback information of the first PDSCH, and the first spatial relation information is determined based on spatial relation information indication in downlink control information (DCI) for scheduling the first PDSCH.

Specifically, the DCI for scheduling the PDSCH may contain indication information, wherein the indication information is used for indicating which piece of information among multiple pieces of spatial relation information corresponding to the target PUCCH resource is used for transmitting the ACK/NACK corresponding to the PDSCH.

For example, the target PUCCH resource may correspond to 2 pieces of spatial relation information. If the bit value in the indication field of the spatial relation information of the DCI for scheduling the PDSCH is 0, the first piece of spatial relation information may be used for transmitting the ACK or NACK of the PDSCH. If the bit value in the indication field of the spatial relation information of the DCI for scheduling the PDSCH is 1, the second piece of spatial relation information may be used for transmitting the ACK or NACK of the PDSCH.

In 220, the terminal device transmits the at least one piece of control information on the target PUCCH resource by using the determined at least one piece of spatial relation information.

Specifically, the terminal device determines an antenna panel and/or a beam corresponding to the first spatial relation information in the at least one piece of spatial relation information, and transmits the first control information in the at least one piece of control information on the target PUCCH resource by using the antenna panel and/or the beam corresponding to the first spatial relation information.

It should be understood that the spatial relation information may also be associated with other transmission factors besides the panel and/or the beam, which is not specifically limited in the embodiment of the present application. When the panel and/or the beam are not associated, the panel and/or the beam may be determined not based on the spatial relation information.

Specifically, the terminal device determines an antenna panel corresponding to each piece of spatial relation information in the at least one piece of spatial relation information, and respectively transmits the control information on the corresponding antenna panel based on each piece of spatial relation information.

For example, the terminal determines one corresponding antenna panel according to one piece of the spatial relation information, and determines one corresponding beam based on the spatial relation information, so that the determined beam is used to transmit the control information on the determined antenna panel.

Optionally, when the terminal device transmits the control information based on different pieces of spatial relation information among the multiple pieces of spatial relation information, used antenna panels and/or beams are different.

In the above, the antenna panel and/or the beam corresponding to the spatial relation information are an antenna panel and/or a beam used by the terminal device for sending or receiving the reference signal indicated by the spatial relation information.

Therefore, in embodiments of the present application, the PUCCH resource may correspond to multiple pieces of spatial relation information. When the control information is transmitted on the PUCCH resource, different pieces of spatial relation information may be used for control information of different receiving ends (which specifically may be TPRs), so that the PUCCH resource may be shared by multiple pieces of control information, and the resource overhead may be saved.

Specifically, the terminal device may simultaneously report ACK/NACK or CSI respectively corresponding to multiple TRPs, so as to support downlink NC-JT better and improve a throughput of a downlink transmission. At the same time, the terminal device may use a same PUCCH resource to transmit PUCCHs to different TRPs by using different antenna panels and/or beams, so that different TRPs may share the same PUCCH resource, thus saving the cost of PUCCH resource.

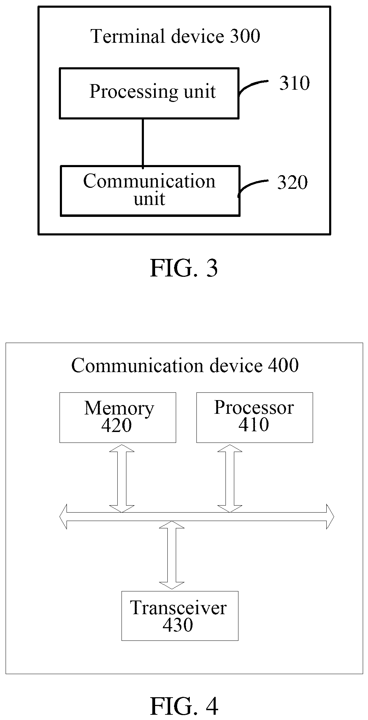

FIG. 3 is a schematic block diagram of a terminal device 300 according to an embodiment of the present application. As shown in FIG. 3, the terminal device 300 includes a processing unit 310 and a communication unit 320.

The processing unit 310 is configured to determine at least one piece of spatial relation information from multiple pieces of spatial relation information corresponding to a target physical uplink control channel (PUCCH) resource, wherein one piece of spatial relation information of the at least one piece of spatial relation information is used for transmitting one piece of control information of at least one piece of control information.

The communication unit 320 is configured to transmit the at least one piece of control information on the target PUCCH resource by using the at least one piece of spatial relation information determined by the processing unit 310.

Optionally, in embodiments of the present application, the processing unit 310 is further configured to:
determine a first spatial relation information for a first control information in the at least one piece of control information from the multiple pieces of spatial relation information, according to at least one of the following:
a reporting configuration of the first control information, content of the first control information, a physical downlink shared channel (PDSCH) corresponding to the first control information, and a control channel for scheduling the PDSCH corresponding to the first control information.

Optionally, in embodiments of the present application, the first control information is channel state information (CSI), and the first spatial relation information is determined based on a CSI reporting configuration corresponding to the first control information.

Optionally, in embodiments of the present application, the first spatial relation information is determined based on a configuration ID of the CSI reporting configuration corresponding to the first control information, a configuration set to which the CSI reporting configuration corresponding to the first control information belongs, or indication information in the CSI reporting configuration corresponding to the first control information.

Optionally, in embodiments of the present application, a reporting resource configuration in the reporting configuration includes the target PUCCH resource.

Optionally, in embodiments of the present application, the first spatial relation information is determined based on whether content of the first control information is acknowledgement/negative acknowledgement ACK/NACK feedback information or the CSI. Or, the first spatial relation information is determined based on spatial relation information indication included in the first control information.

Optionally, in embodiments of the present application, the PDSCH corresponding to the first control information is a first PDSCH, the first control information is ACK/NACK feedback information of the first PDSCH, and the first spatial relation information is determined from the multiple pieces of spatial relation information based on a scheduling order of the first PDSCH and/or a resource index occupied by the control channel scheduling the first PDSCH.

Optionally, in embodiments of the present application, the PDSCH corresponding to the first control information is the first PDSCH, the first control information is the ACK/NACK feedback information of the first PDSCH, and the first spatial relation information is determined based on a transport block index used by the first PDSCH.

Optionally, in embodiments of the present application, the PDSCH corresponding to the first control information is the first PDSCH, the first control information is the ACK/NACK feedback information of the first PDSCH, and the first spatial relation information is determined based on the spatial relation information indication in the downlink control information (DCI) for scheduling the first PDSCH.

Optionally, in embodiments of the present application, the communication unit 320 is further configured to:
receive the multiple pieces of spatial relation information configured by a network side for the target PUCCH resource through radio resource control (RRC) signaling and/or media access control (MAC) signaling.

Optionally, in embodiments of the present application, the communication unit 320 is further configured to: receive the RRC signaling sent by the network side, wherein the RRC signaling is used for configuring a candidate set of the spatial relation information; and receive the MAC signaling sent by the network side, wherein the MAC signaling is used for indicating the multiple pieces of spatial relation information from the candidate set.

Optionally, in embodiments of the present application, the spatial relation information includes a channel state information reference signal CSI-RS resource index, a sounding reference signal (SRS) resource index or a synchronization signal block (SSB) index.

Optionally, in embodiments of the present application, if the spatial relation information includes the CSI-RS resource index, CSI-RS resource indexes included in different pieces of spatial relation information the multiple pieces of spatial relation information belong to different CSI-RS resource sets.

Optionally, in embodiments of the present application, if the spatial relation information includes the SRS resource index, SRS resource indexes included in different pieces of spatial relation information in the multiple pieces of spatial relation information belong to different SRS resource sets.

Optionally, in embodiments of the present application, if the spatial relation information includes the SSB indexes, SSBs corresponding to SSB indexes included in different pieces of spatial relation information in the multiple pieces of spatial relation information carry different cell information.

Optionally, in embodiments of the present application, the processing unit 310 is further configured to:
determine an antenna panel and/or a beam corresponding to the first spatial relation information in the at least one piece of spatial relation information; and
the communication unit 320 is further configured to: transmit the first control information in the at least one piece of control information on the target PUCCH resource by using the antenna panel and/or the beam corresponding to the first spatial relation information.

Optionally, in embodiments of the present application, when the terminal device transmits the control information based on different pieces of spatial relation information among the multiple pieces of spatial relation information, antenna panels and/or beams used are different.

Optionally, in embodiments of the present application, an antenna panel and/or a beam corresponding to the spatial relation information is an antenna panel and/or a beam used by the terminal device for sending or receiving a reference signal indicated by the spatial relation information.

It should be understood that the terminal device 300 may implement a corresponding operation implemented by the terminal device in the above method 200, which will not be described in detail herein for the sake of brevity.

FIG. 4 is a schematic block diagram of a terminal 400 of an embodiment of the present application. A terminal device 400 shown in FIG. 4 includes a processor 410. The processor 410 may call and run a computer program from a memory to implement a method in an embodiment of the present application.

Optionally, as shown in FIG. 4, the terminal device 400 may further include a memory 420, wherein the processor 410 may call and run a computer program from the memory 420 to implement a method in an embodiment of the present application.

In the above, the memory 420 may be a separate device independent of the processor 410 or may be integrated in the processor 410.

Optionally, as shown in FIG. 4, the terminal device 400 may further include a transceiver 430. The processor 410 may control the transceiver 430 to communicate with other devices. Specifically, the transceiver 430 may send information or data to other devices or receive information or data sent by other devices.

In the above, the transceiver 430 may include a transmitter and a receiver. The transceiver 430 may further include antennas, and a number of antennas may be one or more.

Optionally, the terminal 400 may implement the corresponding procedures implemented by a terminal device in a method 200 of embodiments of the present application, which will not be repeated here for the sake of brevity.

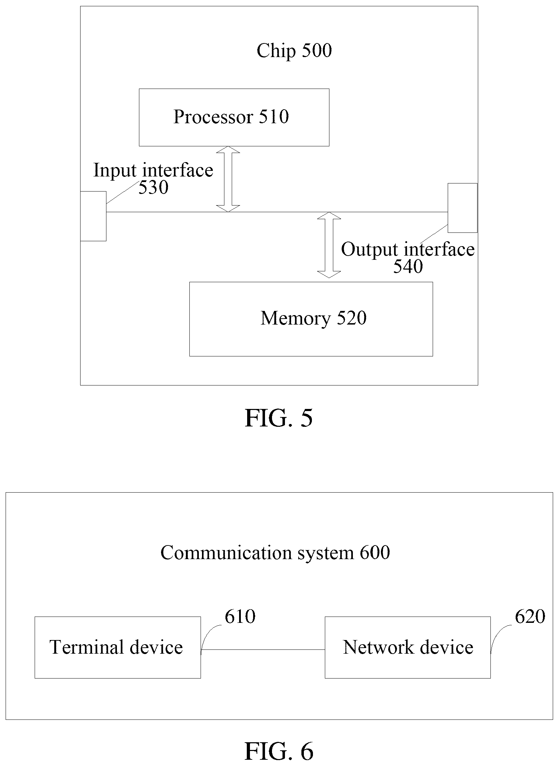

FIG. 5 is a schematic block diagram of a chip according to an embodiment of the present application. A chip 500 shown in FIG. 5 includes a processor 510, wherein the processor 510 may call and run a computer program from a memory to implement a method in embodiments of the present application.

Optionally, as shown in FIG. 5, the chip 500 may further include a memory 520, wherein the processor 510 may call and run a computer program from the memory 520 to implement a method in embodiments of the present application.

In the above, the memory 520 may be a separate device independent of the processor 510 or may be integrated in the processor 510.

Optionally, the chip 500 may further include an input interface 530, wherein the processor 510 may control the input interface 530 to communicate with other devices or chips. Specifically, the input interface 530 may obtain information or data sent by other devices or chips.

Optionally, the chip 500 may further include an output interface 540, wherein the processor 510 may control the output interface 540 to communicate with other devices or chips. Specifically, the output interface 540 may output information or data to other devices or chips.

Optionally, the chip may be applied in a terminal device of embodiments of the present application, and the chip may implement corresponding procedures implemented by a terminal device in various methods of embodiments of the present application, which will not be repeated here for sake of brevity.

Optionally, the chip may be applied in a network device of embodiments of the present application, and the chip may implement corresponding procedures implemented by the network device in various methods of embodiments of the present application, which will not be repeated here for sake of brevity.

It should be understood that the chip mentioned in embodiments of the present application may be referred to as a system-level chip, a system chip, a chip system or a system-on-chip, etc.

FIG. 6 is a schematic block diagram of a communication system 600 provided by an embodiment of the present application. As shown in FIG. 6, the communication system 600 may include a terminal device 610 and a network device 620.

In the above, the terminal device 610 may be configured to implement corresponding functions implemented by the terminal device in above-mentioned method, and the network device 620 may be configured to implement corresponding functions implemented by the network device in above-mentioned method, which will not be repeated here for sake of brevity.

The processor above-mentioned may be a general purpose processor, a digital signal processor (DSP), a field programmable gate array (FPGA), an application specific integrated circuit (ASIC) or other programmable logic devices, a transistor logic device, or a discrete hardware component, etc. The general-purpose processor mentioned above may be a microprocessor or any conventional processor, etc.

Above memory may be a volatile memory or non-volatile memory, or may include both volatile and non-volatile memories. The non-volatile memory may be a read-only memory (ROM), a programmable ROM (PROM), an erasable PROM (EPROM), an electrically erasable EPROM (EEPROM), or a flash memory. The volatile memory may be a Random Access Memory (RAM).

It should be understood that, above memory is an illustrative but not limiting description. For example, the memory in embodiments of the present application also may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM), etc. That is to say, memories in embodiments of the present application are intended to include, but are not limited to, these and any other suitable types of memories.

Those of ordinary skill in the art will recognize that the exemplary elements and algorithm acts described in combination with embodiments disclosed herein may be implemented in electronic hardware, or a combination of computer software and electronic hardware. Whether these functions are implemented in hardware or software depends on the specific application and design constraints of the technical solution. Those skilled in the art may use different methods to implement the described functions in respect to each particular application, but such embodiment should not be construed to be beyond the scope of the present application.

Those skilled in the art may clearly understand that for convenience and conciseness of description, the specific working processes of the systems, apparatuses and units described above may refer to corresponding processes in method embodiments and will not be described here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division manners in actual embodiment, for example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the purpose of the embodiments.

In addition, various functional units in various embodiments of the present application may be integrated in one processing unit, or the various units may be physically present separately, or two or more units may be integrated in one unit.

The functions may be stored in a computer readable storage medium if realized in a form of software functional units and sold or used as a separate product. Based on this understanding, the technical solution of the present application, in essence, or the part contributing to the prior art, or the part of the technical solution, may be embodied in the form of a software product stored in a storage medium, including a number of instructions for causing a computer device (which may be a personal computer, a server, or a network device and the like) to perform all or part of the acts of the method described in various embodiments of the present application. The foregoing storage medium includes: any medium that may store program code, such as a USB flash drive, a removable hard disk, a read-only memory (Read-Only Memory, ROM), a random access memory (Random Access Memory, RAM), a magnetic disk, or an optical disc.

What are described above are merely exemplary embodiments of the present application, but the protection scope of the present application is not limited thereto. Any variation or substitution that may be easily conceived by a person skilled in the art within the technical scope disclosed by the present application shall be included within the protection scope of the present application. Therefore, the protection scope of the present application shall be determined by the protection scope of the claims.

## Claims

1. A wireless communication method, comprising:
determining, by a terminal device, at least one piece of spatial relation information from a plurality pieces of spatial relation information corresponding to a target physical uplink control channel (PUCCH) resource, wherein one piece of spatial relation information of the at least one piece of spatial relation information is used for transmitting one of at least one piece of control information; and
transmitting, by the terminal device, the at least one piece of control information on the target PUCCH resource respectively through the determined at least one piece of spatial relation information.

2. The method of claim 1, wherein determining, by the terminal device, the at least one piece of spatial relation information from the plurality pieces of spatial relation information corresponding to the target physical uplink control channel (PUCCH) resource comprises:
determining, by the terminal device, a first spatial relation information for a first control information in the at least one piece of control information, from the plurality pieces of spatial relation information according to at least one of following:
a reporting configuration of the first control information, content of the first control information, a physical downlink shared channel (PDSCH) corresponding to the first control information, and a control channel for scheduling the PDSCH corresponding to the first control information.

3. The method of claim 2, wherein the first control information is channel state information (CSI), and the first spatial relation information is determined based on a CSI reporting configuration corresponding to the first control information.

4. The method of claim 3, wherein the first spatial relation information is determined based on a configuration ID of the CSI reporting configuration corresponding to the first control information, a configuration set to which the CSI reporting configuration corresponding to the first control information belongs, or indication information in the CSI reporting configuration corresponding to the first control information.

5. The method of any one of claims 2 to 4, wherein a reporting resource configuration in the reporting configuration comprises the target PUCCH resource.

6. The method of claim 2, wherein the first spatial relation information is determined based on whether the content of the first control information is acknowledgement/negative acknowledgement ACK/NACK feedback information or CSI; or,
the first spatial relation information is determined based on spatial relation information indication included in the first control information.

7. The method of claim 2, wherein the PDSCH corresponding to the first control information is a first PDSCH, the first control information is ACK/NACK feedback information of the first PDSCH, and the first spatial relation information is determined from the plurality pieces of spatial relation information based on a scheduling order of the first PDSCH and/or a resource index occupied by a control channel for scheduling the first PDSCH.

8. The method of claim 2, wherein the PDSCH corresponding to the first control information is a first PDSCH, the first control information is ACK/NACK feedback information of the first PDSCH, and the first spatial relation information is determined based on a transport block index used by the first PDSCH.

9. The method of claim 2, wherein the PDSCH corresponding to the first control information is a first PDSCH, the first control information is ACK/NACK feedback information of the first PDSCH, and the first spatial relation information is determined based on spatial relation information indication in downlink control information (DCI) for scheduling the first PDSCH.

10. The method of any one of claims 1 to 9, further comprising:
receiving, by the terminal device, the plurality pieces of spatial relation information configured by a network side for the target PUCCH resource through radio resource control (RRC) signaling and/or media access control (MAC) signaling.

11. The method of claim 10, wherein receiving, by the terminal device, the plurality pieces of spatial relation information configured by the network side for the target PUCCH resource through the radio resource control (RRC) signaling and/or the medium access control (MAC) signaling comprises:
receiving, by the terminal device, the RRC signaling sent by the network side, wherein the RRC signaling is used for configuring a candidate set of spatial relation information; and
receiving, by the terminal device, the MAC signaling sent by the network side, wherein the MAC signaling is used for indicating the plurality pieces of spatial relation information from the candidate set.

12. The method of any one of claims 1 to 11, wherein the spatial relation information comprises a channel state information reference signal (CSI-RS) resource index, a sounding reference signal (SRS) resource index or a synchronization signal block (SSB) index.

13. The method of claim 12, wherein if the spatial relation information comprises the CSI-RS resource index, CSI-RS resource indexes included in different pieces of spatial relation information among the plurality pieces of spatial relation information belong to different CSI-RS resource sets.

14. The method of claim 12, wherein if the spatial relation information comprises the SRS resource index, SRS resource indexes included in different pieces of spatial relation information among the plurality pieces of spatial relation information belong to different SRS resource sets.

15. The method of claim 12, wherein if the spatial relation information comprises the SSB index, SSBs corresponding to SSB indexes included in different pieces of spatial relation information among the plurality pieces of spatial relation information carry different pieces of cell information.

16. The method of any one of claims 1 to 15, wherein transmitting, by the terminal device, the at least one piece of control information on the target PUCCH resource respectively through the determined at least one piece of spatial relation information comprises:
determining, by the terminal device, an antenna panel and/or a beam corresponding to the first spatial relation information in the at least one piece of spatial relation information; and
transmitting the first control information in the at least one piece of piece of control information on the target PUCCH resource through the antenna panel and/or beam corresponding to the first spatial relation information.

17. The method of any one of claims 1 to 16, wherein when the terminal device transmits the control information based on different pieces of spatial relation information in the plurality pieces of spatial relation information, different antenna panels and/or beams are used.

18. The method of claim 16 or 17, wherein the antenna panel and/or beam corresponding to the spatial relation information is an antenna panel and/or a beam used by the terminal device for sending or receiving a reference signal indicated by the spatial relation information.

19. A terminal device, comprising a processing unit and a communication unit,
wherein the processing unit is configured to determine at least one piece of spatial relation information from a plurality pieces of spatial relation information corresponding to a target physical uplink control channel (PUCCH) resource, wherein one of the at least one piece of spatial relation information is used for transmitting one piece of control information of at least one piece of control information; and
the communication unit is configured to transmit the at least one piece of control information on the target PUCCH resource respectively through the at least one piece of spatial relation information determined by the processing unit.

20. The terminal device of claim 19, wherein the processing unit is further configured to:
determine a first spatial relation information for the first control information in the at least one piece of control information, from the plurality pieces of spatial relation information according to at least one of following:
a reporting configuration of the first control information, content of the first control information, a physical downlink shared channel (PDSCH) corresponding to the first control information, and a control channel for scheduling the PDSCH corresponding to the first control information.

21. The terminal device of claim 20, wherein the first control information is channel state information (CSI), and the first spatial relation information is determined based on a CSI reporting configuration corresponding to the first control information.

22. The terminal device of claim 21, wherein the first spatial relation information is determined based on a configuration ID of the CSI reporting configuration corresponding to the first control information, a configuration set to which the CSI reporting configuration corresponding to the first control information belongs, or indication information in the CSI reporting configuration corresponding to the first control information.

23. The terminal device of any one of claims 20 to 22, wherein a reporting resource configuration in the reporting configuration comprises the target PUCCH resource.

24. The terminal device of claim 20, wherein the first spatial relation information is determined based on whether the content of the first control information is acknowledgement/negative acknowledgement ACK/NACK feedback information or CSI; or,
the first spatial relation information is determined based on spatial relation information indication included in the first control information.

25. The terminal device of claim 20, wherein the PDSCH corresponding to the first control information is a first PDSCH, the first control information is ACK/NACK feedback information of the first PDSCH, and the first spatial relation information is determined from the plurality pieces of spatial relation information and based on a scheduling order of the first PDSCH and/or a resource index occupied by a control channel for scheduling the first PDSCH.

26. The terminal device of claim 20, wherein the PDSCH corresponding to the first control information is a first PDSCH, the first control information is ACK/NACK feedback information of the first PDSCH, and the first spatial relation information is determined based on a transport block index used by the first PDSCH.

27. The terminal device of claim 20, wherein the PDSCH corresponding to the first control information is a first PDSCH, the first control information is ACK/NACK feedback information of the first PDSCH, and the first spatial relation information is determined based on spatial relation information indication in downlink control information (DCI) for scheduling the first PDSCH.

28. The terminal device of any one of claims 19 to 27, wherein the communication unit is further configured to:
receive the plurality pieces of spatial relation information configured by a network side for the target PUCCH resource through radio resource control (RRC) signaling and/or media access control (MAC) signaling.

29. The terminal device of claim 28, wherein the communication unit is further configured to:
receive the RRC signaling sent by the network side, wherein the RRC signaling is used for configuring a candidate set of spatial relation information; and
receive the MAC signaling sent by the network side, wherein the MAC signaling is used for indicating the plurality pieces of spatial relation information from the candidate set.

30. The terminal device of any one of claims 19 to 29, wherein the spatial relation information comprises a channel state information reference signal (CSI-RS) resource index, a sounding reference signal (SRS) resource index or a synchronization signal block (SSB) index.

31. The terminal device of claim 30, wherein if the spatial relation information comprises the CSI-RS resource index, CSI-RS resource indexes included in different pieces of spatial relation information among the plurality pieces of spatial relation information belong to different CSI-RS resource sets.

32. The terminal device of claim 30, wherein if the spatial relation information comprises the SRS resource index, SRS resource indexes included in different pieces of spatial relation information among the plurality pieces of spatial relation information belong to different SRS resource sets.

33. The terminal device of claim 30, wherein if the spatial relation information comprises the SSB index, SSBs corresponding to SSB indexes included in different pieces of spatial relation information among the plurality pieces of spatial relation information carry different pieces of cell information.

34. The terminal device of any one of claims 19 to 33, wherein the processing unit is further configured to:
determine an antenna panel and/or a beam corresponding to the first spatial relation information in the at least one piece of spatial relation information; and
the communication unit is further configured to transmit the first control information in the at least one piece of control information on the target PUCCH resource through the antenna panel and/or the beam corresponding to the first spatial relation information.

35. The terminal device of any one of claims 19 to 34, wherein when the terminal device transmits the control information based on different pieces of spatial relation information in the plurality pieces of spatial relation information, different antenna panels and/or beams are used.

36. The terminal device of claim 34 or 35, wherein the antenna panel and/or the beam corresponding to the spatial relation information is an antenna panel and/or a beam used by the terminal device for sending or receiving a reference signal indicated by the spatial relation information.

37. A chip, comprising: a processor configured to call and run a computer program from a memory, and causes a device on which the chip is installed to execute the method of any one of claims 1 to 18.

38. A terminal device, comprising: a processor and a memory, wherein the memory is configured to store a computer program, and the processor is configured to call and run the computer program stored in the memory to execute the method of any one of claims 1 to 18.

39. A computer readable storage medium configured to store a computer program, wherein the computer program causes a computer to execute the method of any one of claims 1 to 18.
